Europäisches Patentamt

**European Patent Office**

Office européen des brevets

(19)

(11) Publication number: **0 019 278**
**B1**

(12) **EUROPEAN PATENT SPECIFICATION**

(45) Date of publication of patent specification: **14.03.84**

(51) Int. Cl.³: **G 02 F 1/29**

(21) Application number: **80102691.5**

(22) Date of filing: **14.05.80**

(54) Electrooptic light deflector.

(30) Priority: **15.05.79 JP 59569/79**
**14.11.79 JP 147418/79**
**28.01.80 JP 8549/80**
**27.02.80 JP 23542/80**
**27.02.80 JP 23543/80**
**27.02.80 JP 24383/80 U**

(43) Date of publication of application:
**26.11.80 Bulletin 80/24**

(45) Publication of the grant of the patent:
**14.03.84 Bulletin 84/11**

(84) Designated Contracting States:
**DE FR GB IT**

(56) References cited:
**CH - A - 591 097**
**DE - A - 1 764 944**
**DE - A - 1 805 395**
**DE - A - 2 057 183**
**DE - A - 2 436 702**
**DE - A - 2 624 916**
**DE - B - 1 244 961**
**DE - B - 1 303 849**

(73) Proprietor: **NEC CORPORATION**
**33-1, Shiba 5-chome, Minato-ku**
**Tokyo 108 (JP)**

(72) Inventor: Watanabe, Takaya
c/o Nippon Electric Co., Ltd 33-1, Shiba Gochome
Minato-ku, Tokyo (JP)
Inventor: Matsuba, Teruo
c/oNippon Electric Co., Ltd 33-1, Shiba Gochome
Minato-ku, Tokyo (JP)

(74) Representative: **Vossius Vossius Tauchner**
**Heunemann Rauh**
**Siebertstrasse 4 P.O. Box 86 07 67**
**D-8000 München 86 (DE)**

(56) References cited:
**DE - B - 2 164 712**
**US - A - 3 736 046**
**US - A - 3 887 885**
**US - A - 4 004 847**
**US - A - 4 066 338**

Courier Press, Leamington Spa, England.

### Electrooptic light deflector

This invention relates to an electrooptic light deflector for controlling the deflection of a light beam in response to an applied electrical signal according to the first part of claim 1. Such a deflector is known from US—A—4 004 847.

To improve the signal processing speed of a data processing system or a communication system as well as to simplify the structure thereof, research and development efforts have been directed to printers and facsimile apparatuses based on photoelectric devices. To such a system, an electeoptic light deflector is indispensable for spatially and periodically controlling in response to an electric signal the deflection of a light beam supplied, for example, from a laser.

A conventional electrooptic deflector is proposed, for example, in U.S.—A—3,887,885 particularly in Fig. 2 thereof. The deflector shown in this document includes an electrooptic crystal, interdigital electrodes (IDEs) and formed on the crystal surface and a circuit for applying to these IDEs a low voltage having a high frequency in response to a modulating signal. This known deflector utilizes a diffraction phenomenon occurring in a layer in the vicinity of the crystal surface. The incident beam is coupled onto the front side of the crystal in an angle towards the crystal surface so that the beam is totally reflected at an inside of said surface. The deflection of the incident light beam depends on the refractive index of the layer which is spatially periodical in the direction of the width of the layer. The incident light beam is consequently diffracted in the layer in a direction parallel to the surface of the crystal on which the IDEs are formed to produce output light beams of the zeroth order to the second order. A slit selects one output light beam of a desired order out of the beams. This known deflector cannot provide a large deflection angle.

A further typical optical light modulator is disclosed in an article by N.G. Theophanous, entitled "A $Gd_2(MoO_4)_3$ Longitudinal Electrooptic Modulator at 6328 Å", IEEE JOURNAL OF QUANTUM ELECTRONICS, pp. 507—510, August issue, 1976. This light modulator, however, requires a high-voltage generating circuit, resulting in a complicated and costly device.

It is, therefore one object of the present invention as claimed to provide a simplified light deflector free from the above-described disadvantages and capable of providing a comparatively large deflection angle.

The present invention is based on the discovery that a certain kind of light transmissive crystal exhibits a nonlinear distribution of refractive index when electric field is applied in the thickness direction thereof and consequently that a light beam made incident onto the crystal in the direction perpendicular to the thickness direction is deflected in the thickness direction while travelling therethrough.

In a preferred embodiment of the invention interdigital electrodes are provided on four side surfaces of a parallelepiped light transmissive body except for the light-beam incident surface and the light-beam output surface thereof. With this arrangement the incident light beam can be deflected in response to voltages applied to said electrodes in any desired direction.

The invention will be described in detail in conjunction with the accompanying drawings, in which:

Fig. 1 is a perspective view of a first embodiment of the present invention;

Figure 2A and 2B are diagrams for describing the principle of the present invention;

Figs. 3, 4, and 5 are graphs representing the relationship between a voltage applied, a light beam incident position, a modulating signal frequency, and a deflection angle, respectively;

Fig. 6 is a circuit diagram showing a part of the first embodiment;

Fig. 7 is a graph representing another deflection angle to modulating signal voltage relationship in the first embodiment;

Figs. 8 and 10 are perspective views of second and third embodimments, respectively;

Figs. 9 and 11 are graphs representing the deflection angle-applied voltage relationships for the second and third embodiments;

Fig. 12 is a graph representing another deflection angle-applied voltage relationship for the third embodiment;

Fig. 13 is a perspective view of a fourth embodiment of the present invention;

Fig. 14 is a graph representing the deflection angle to applied voltage relationship in the fourth embodiment;

Fig. 15 is a graph representing another deflection angle to applied voltage relationship in the fourth embodiment; and

Figs. 16 and 17 are perspective views of fifth and sixth embodiments, respectively.

In the drawings, like reference numerals represent like structural elements.

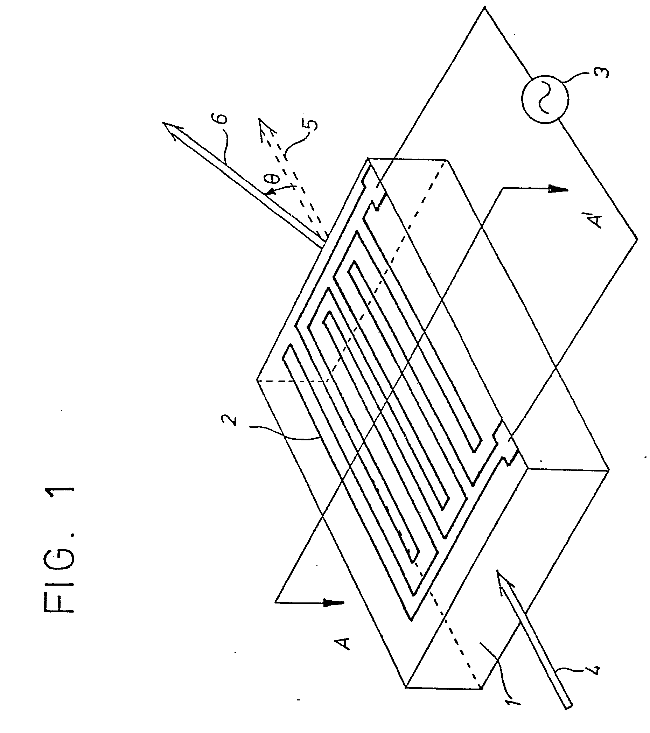

Referring first to Fig. 1, the first embodiment of the present invention comprises a light transmissive body 1 made of a material having the trigonal crystal structure such as lithium niobate ($LiNbO_3$) or lithium tantalate ($TiTaO_3$), a plurality of interdigital electrodes (IDEs) 2 formed on the surface of the body 1 by a photolithographical method, and a voltage source 3 for supplying a high-frequency voltage to the IDEs 2. The IDEs are made of three layers of chromium (Cr), platinum (Pt), and gold (Au)

2

respectively formed one after another on the body 1 in parallel to the direction of the incidence of light beam. For details of the lithographic method, reference is made to the description appearing in the column 6 of US—A—3 887 885.

A light beam 4 made incident onto one end surface of the body 1 is deflected upward, as denoted by an arrow 6 in Fig. 1, in response to a change in the refractive index developed in the body 1 in its thickness direction of the body 1 by the high-frequency voltage applied to the IDEs.

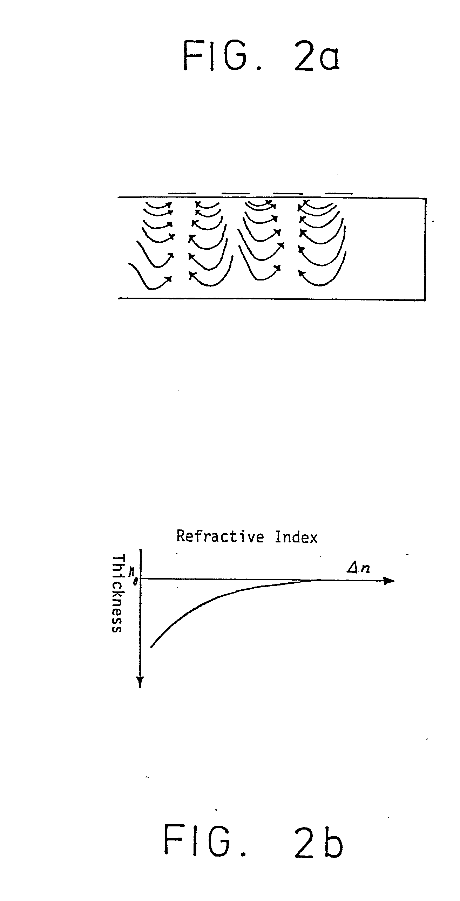

The principle of deflection of the light beam will be described with reference to Figs. 2A and 2B.

The application of the high-frequency voltage to be described later to the IDEs 2 raises the electric field intensity within the body not only at its surface but also at the various points lying in the thickness direction as shown in Fig. 2A. Due to the distribution of the field intensity, the refractive index exhibits a change from a large value at the upper portion of the body 1 to a small value toward the bottom portion thereof as shown in Fig. 2B. Consequently, the light beam incident upon the end surface of the body 1 is deflected upward by an angle of $(+\theta)$, in response to the refractive index distribution. If no voltage is applied to the IDEs 2, the light beam 4 is emanated from the body 1 in the direction shown by an arrow 5 in Fig. 1 without being deflected.

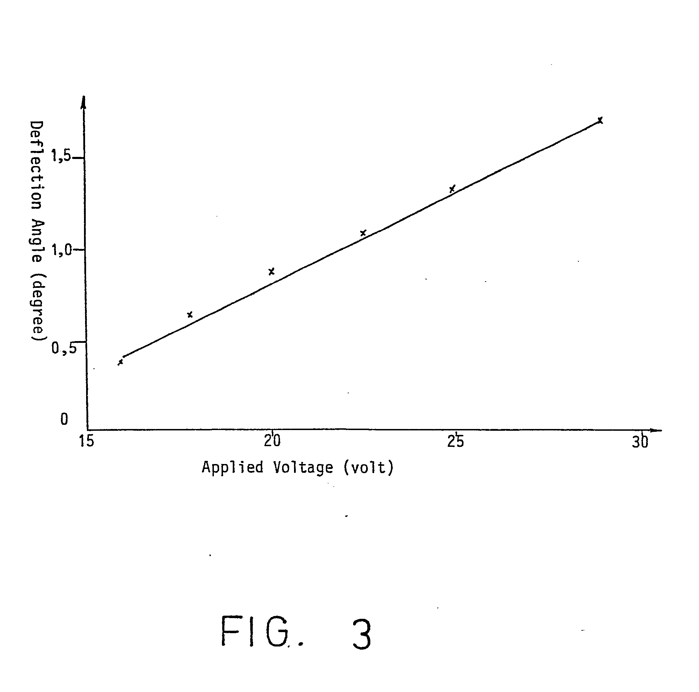

Referring to Fig. 3, there is shown the relationship between a deflection angle and a voltage applied in the case where the body 1 consists of lithium niobate. The deflection angle was measured and shown in Table 2 (showing conditions of measurement for obtaining the deflection angle to applied voltage relationships corresponding to the materials for the light transmissive body) for various conditions and factors including voltage and frequency of the signal applied, types of electrodes, dimensions and materials of the body 1, the diameter of the incident light beam, and the incident position of the light beam in the body. Of these conditions shown in Table 2, condition 1 corresponds to the embodiment of Fig. 1.

Referring to Fig. 3 if ohe voltage applied is considerably low (i.e., lower than 15 V), a change in the refractive index takes place in the vicinity of the surface layer alone. Consequently, the incident light beam can hardly be deflected as is the case with the deflector disclosed in Reference 1. If the applied voltage is high (for example, above a few hundred volts), then the line of the electric force is distributed in parallel to the region between one surface and the other surface of the body 1. Accordingly, the refractive index of the body 1 does not undergo any change as in the modulator disclosed in said IEEE Journal of Quantum Electronics. The light beam is therefore not directed at all. It follows consequently that an optimum voltage for changing the distribution of the refractive index in the thickness direction of the body 1 must be applied. It will also be noted from Figs. 2A and 2B that the region of the body 1 in which the refractive index exhibits the change is limited to the vicinity of the region in which the IDEs 2 are formed. This indicates that an increase in the electrode length contributes to the increase in the deflection angle.

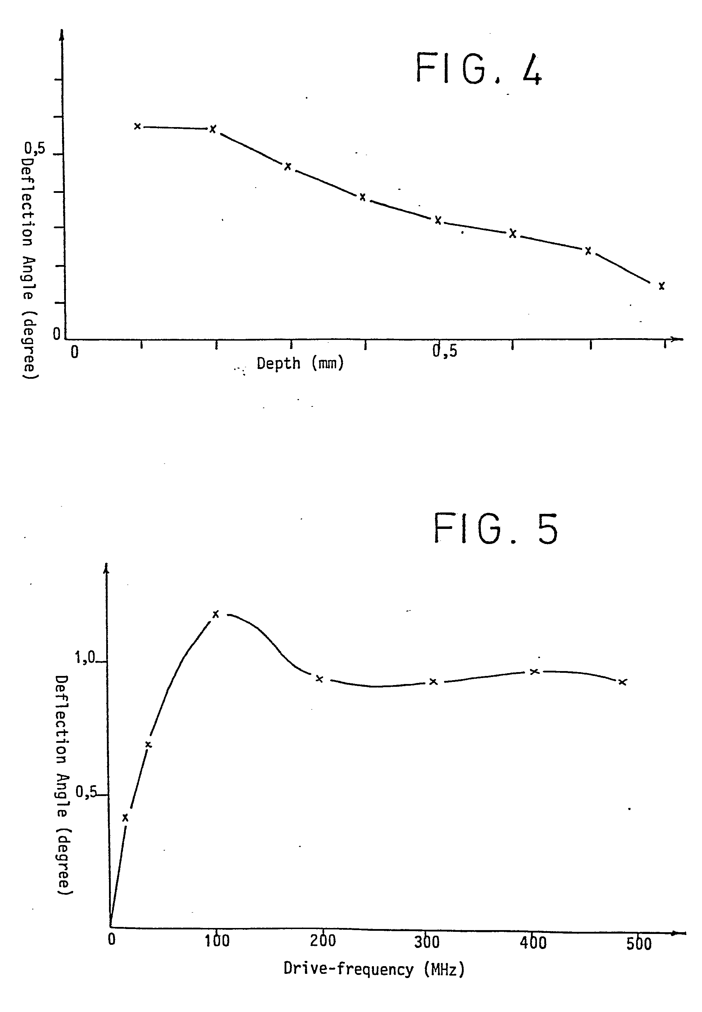

Referring to Fig. 4, the relationship between the incident position of a light beam (a distance from the top surface of the body) and the deflection angle is shown for the deflector of Fig. 1. The relationship is for the modulating signal of 40 megahertz (MHz) and 20 volts. It will be noted that the refractive index of the body 1 changes with the increase in distance from the surface of the body 1 as shown in Fig. 2A.

Fig. 5 shows a curve showing the deflection angle versus modulating signal frequency characteristics of the light deflector of Fig. 1, with the voltage fixed at 20 volts and with the light beam 4 made incident at a point 0.2 millimeters from the surface of the body. The curve indicates that the deflection angle is controllable not only by the voltage but also by the frequency of the modulating signal in the frequency range of up to 100 MHz.

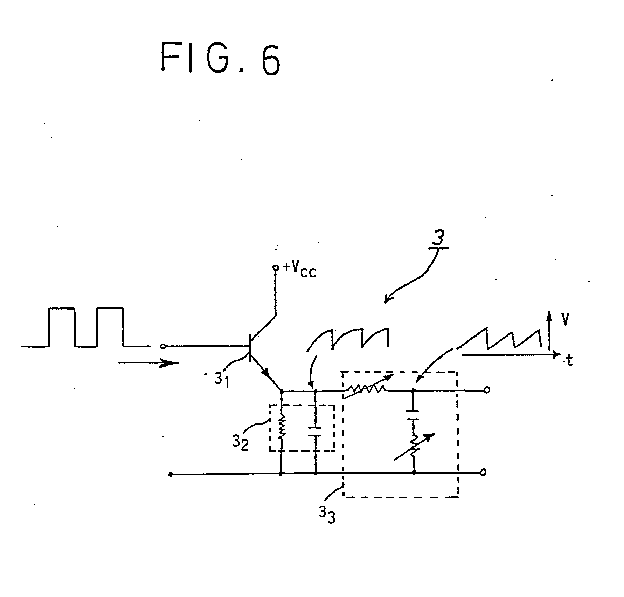

Referring to Fig. 6, the high-frequency voltage generating circuit 3 used in Fig. 1 includes a transistor $3_1$ for switching responsive to the sequence of input square pulses, an integration circuit $3_2$ for integrating the output of the transistor $3_1$, and a shaping circuit $3_3$ for shaping the output of the integration circuit $3_2$ into a saw-tooth wave. If the saw-tooth wave thus obtained is applied to the IDEs 2 in Fig. 1, the light beam from the output side of the body is continuously deflected from the position 5 shown by a dotted line to the position 6 shown by a solid line, in response to a value of voltage of the saw-tooth wave. While the light transmissive body and electrodes are formed of the trigonal crystal and IDEs in the above-mentioned embodiment, the former may be formed of various other materials and the latter may be formed in various configurations, as will be described hereunder.

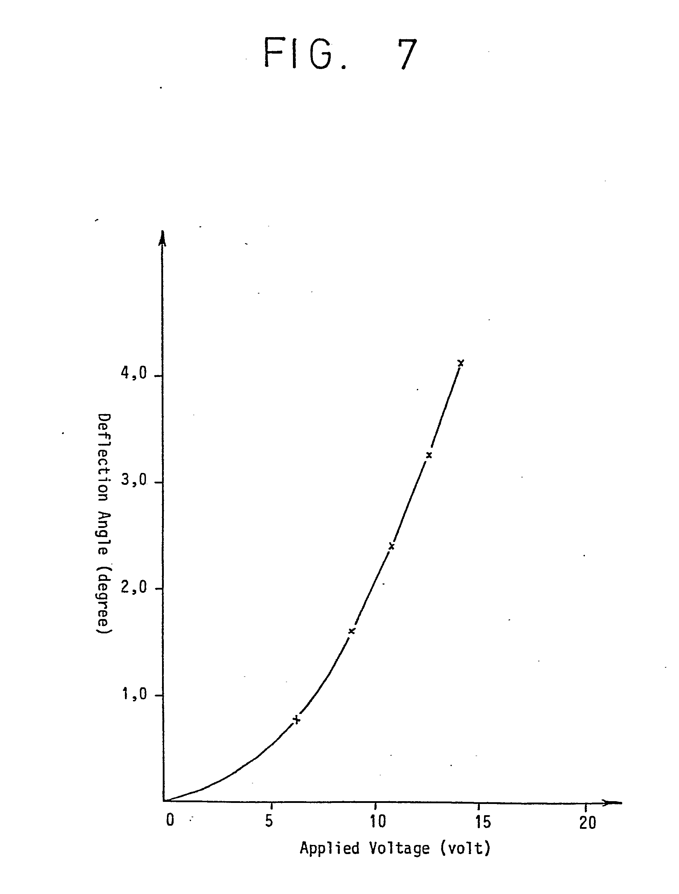

Fig. 7 shows a curve showing the defection angle vs. applied voltage characteristics for the body 1 made of a polycrystal transparent ceramic (PLZT), with the light beam made incident onto the body 1 satisfying the conditions 2 shown in Table 2. With this structure, the light beam is deflected upward based on the principle of Figs. 2A and 2B.

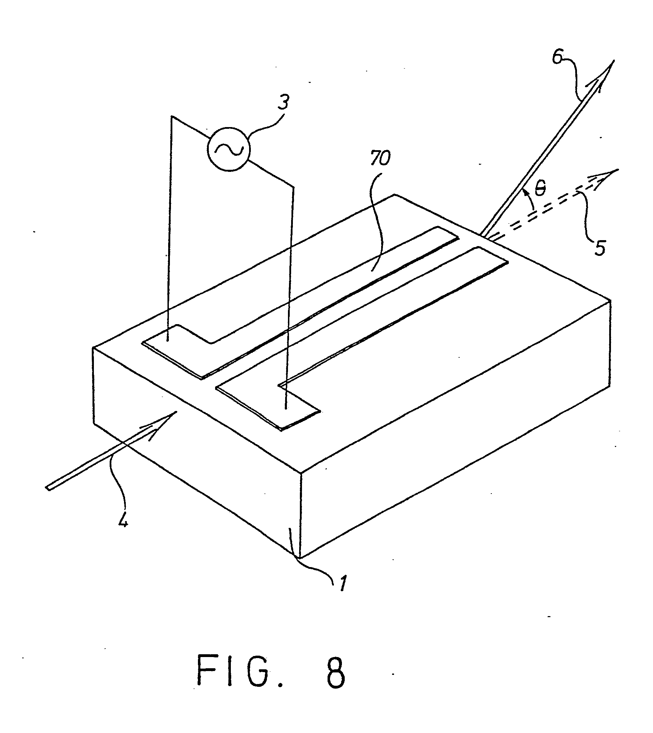

Referring to Fig. 8, a second embodiment of the present invention has the body 1 made of bismuth germanium oxide $(Bi_{12}GeO_{20})$, one of tetragonal crystals, and coplanar electrodes 70.

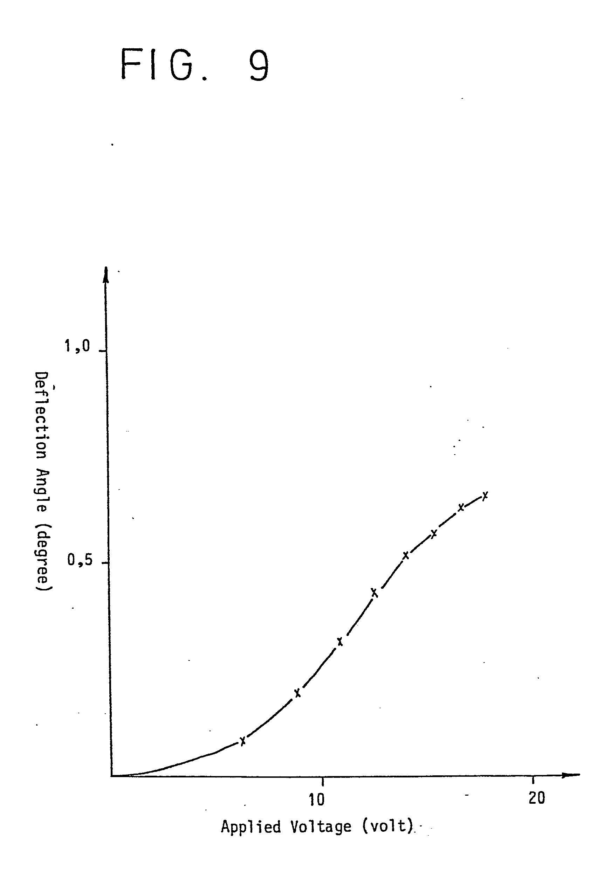

Fig. 9 shows a curve showing the deflection angle vs. applied voltage characteristics of the second embodiment for the body 1 made of $Bi_{12}GeO_{20}$ with the light beam made incident satisfying the conditions 3 given in Table 2.

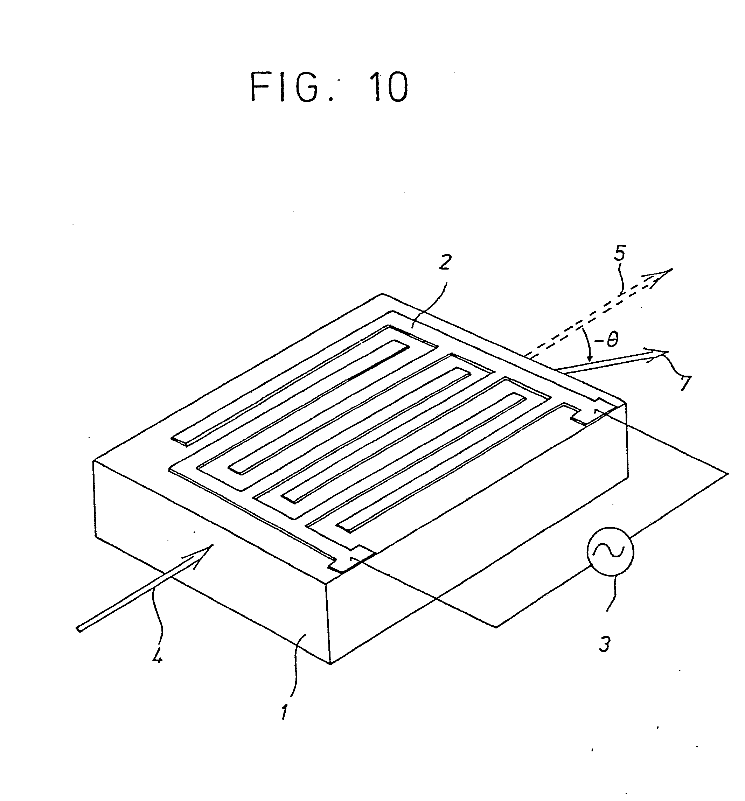

Referring to Fig. 10, the third embodiment of the present invention includes the body 1 made of lead molybdate $(PbMoO_4)$ having a tetragonal crystal structure. In a tetragonal crystal body, the change in the refractive index distribution due to the high-frequency voltage applied is reverse to that shown in Fig. 2A. More specifically the refractive index in the vicinity of the surface of the body 1 is smaller than that in the vicinity of the bottom thereof. Consequently, the light beam 4 is deflected down by an angle of $(-\theta)$ as represented as an output light beam 7 in Fig. 10.

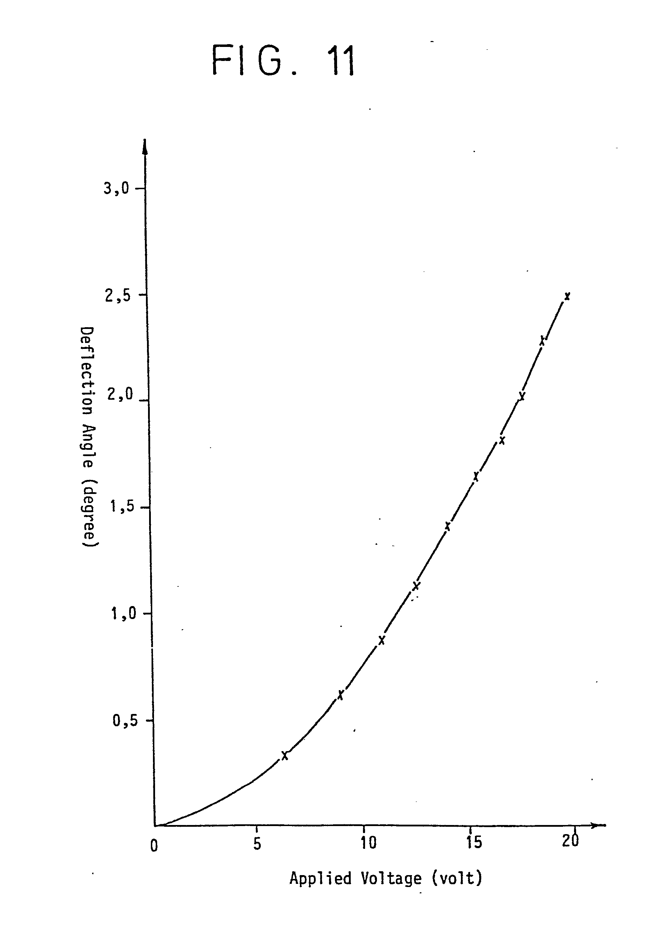

Fig. 11 shows a curve for the third embodiment representing the deflection vs. applied voltage characteristics for the light beam made incident onto the body 1 of $PbMoO_4$ satisfying the conditions 4 shown in Table 2.

When the light beam is made incident onto the body 1 under the conditions 5 shown in Table 2 with the body 1 made of an amorphous material such as glass (mainly including thirty-eight weight percent $SiO_2$ and sixty weight percent PbO), the deflection angle was 0.2°. In the case, the light beam was deflected upward as in the case of Fig. 1. In addition to the above-mentioned embodiments, various modifications of the present deflector can be made using other materials shown in Table 1. More detailed description will be given later about those modifications.

TABLE 1

| Optical Material Used | | | Direction of Deflection |
|---|---|---|---|
| Polycrystal | | $(Pb, La)(Zr, Ti)O_3$ or $(Pb, Bi)(Zr, Ti)O_3$ | $+\theta$ |
| Amorphous Material | | glass ($SiO_2$ 38%, PbO 60%), $TeO_2$ glass, or $As_2S_3$ glass | $+\theta$ |
| Crystal | Triclinic Crystal | $CsH_3(SeO_3)$ | $+\theta$ |
| | Trigonal Crystal | $LiNbO_3$ or $LiTaO_3$ | $+\theta$ |
| | Monoclinic Crystal | $C(CH_2OH)_4$ or $Ca_2Nb_2O_7$ | $+\theta$ |
| | Hexagonal Crystal | $TeO_2$, $YAlO_3$ or $SiO_2$ | $+\theta$ |
| | Rhombic Crystal | $\alpha-HIO_3$, $Ba_2NaNb_5O_{15}$, or Rochelle salt | $+\theta$ |
| | Cubic Crystal | $Y_3Al_5O_{12}$, $Gd_3Ga_5O_{12}$, $Bi_{12}GeO_{20}$, GaAs, ZnS, or GaP | $+\theta$ |
| | Tetragonal Crystal | $PbMoO_4$, $TiO_2$, $CaWO_4$, $BaTiO_3$, $KH_2PO_4$, or $NH_4H_2PO_4$ | $-\theta$ |

In the tetragonal crystal group shown in Table 1, rutile (TiO$_2$) having a small lattice spacing gives the refractive index change similar to the one in PbMoO$_4$ even when a direct current voltage is applied. By the use of such a crystal, a light deflector free from the above-mentioned circuit 3 can be provided.

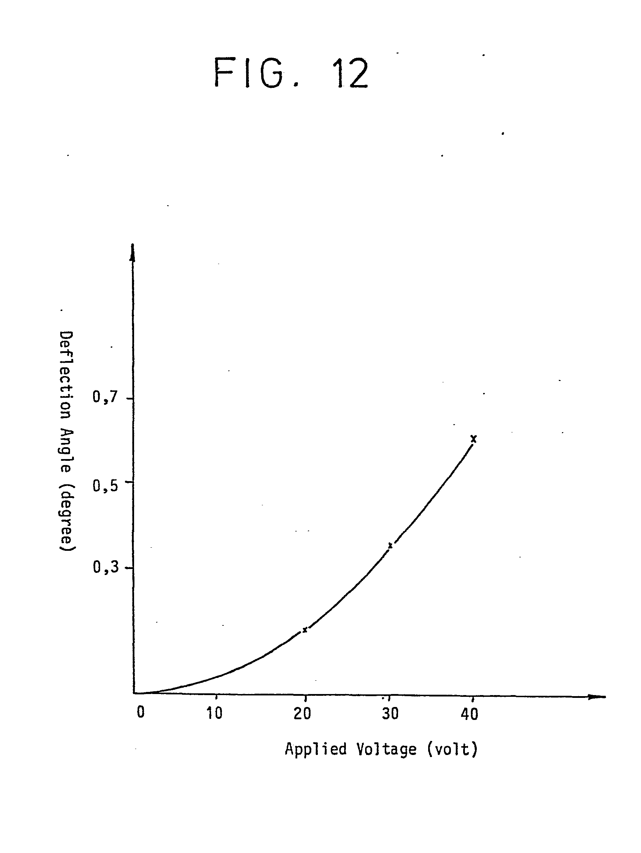

Fig. 12 shows another deflection angle vs. applied voltage characteristics for the light beam made incident onto the body made of rutile satisfying the conditions 6 shown in Table 2.

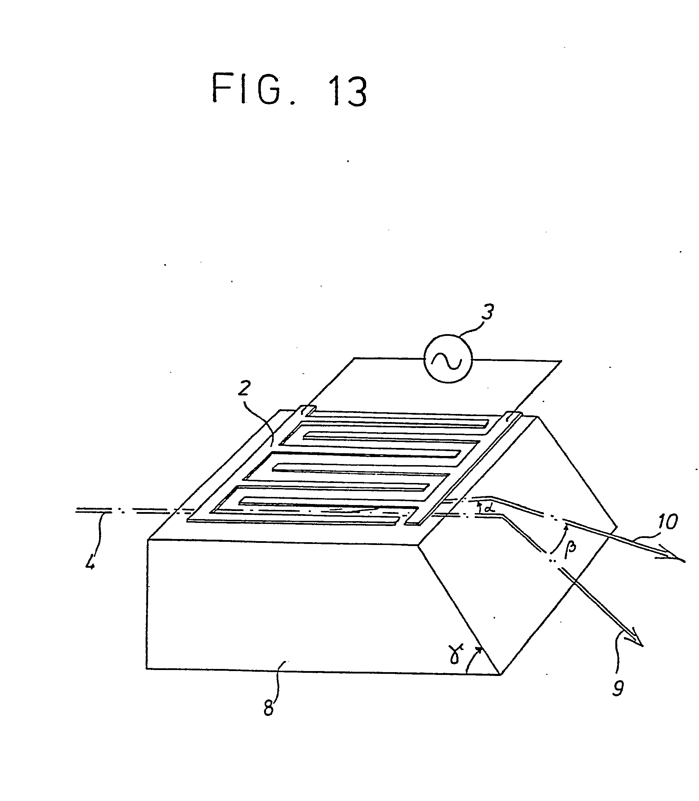

Referring to Fig. 13, the fourth embodiment of the present invention adapted to provide a larger deflection angle comprises a light transmissive body 8 made of lithium niobate and having a light-beam output side surface tapered toward the bottom thereof, interdigital electrodes (IDEs) 2 formed on the surface of the body 8 by a photolithographical method, and a circuit 3 for applying a high-frequency voltage to the IDEs 2. Unless the high-frequency voltage is applied to the body 8, the light beam 4 incident onto the body 8 is emanated in the direction as represented by an arrow 9. In the presence of high-frequency voltage applied to the body 8, the incident light beam 4 is deflected upward in the direction as represented by an arrow 10 due to the change in the refractive index distribution.

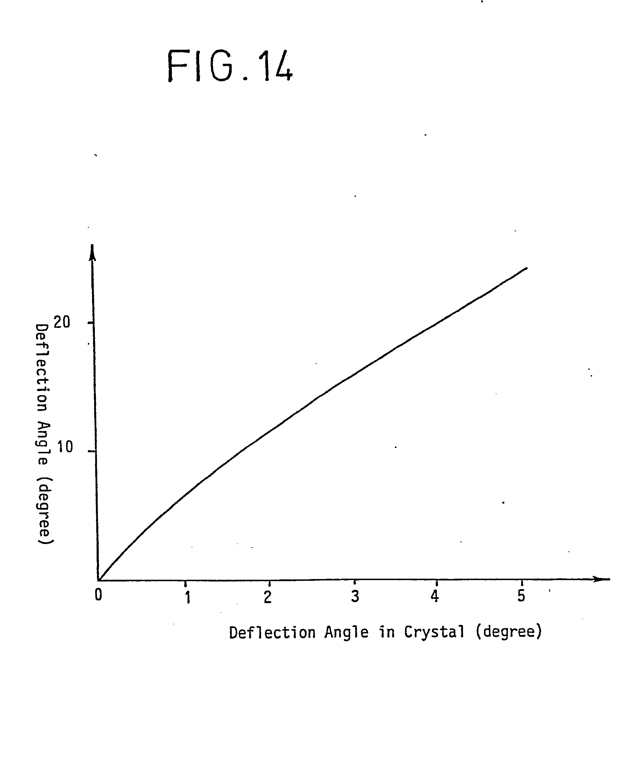

Fig. 14 is a graph representing the relationship between the deflection angle $\alpha$ of a light beam incident onto the body made of LiNbO$_3$ and the deflection angle $\beta$ of output light beam. Each deflection angle is obtained by calculation according to the Snell's law for the case where the side surface of the body 8 of Fig. 13 is tapered at 65°, and the light beam is given into the body under the conditions 7 given in Table 2. Therefore, it is observed that the deflection angle is greatly increased as compared to that of Fig. 1.

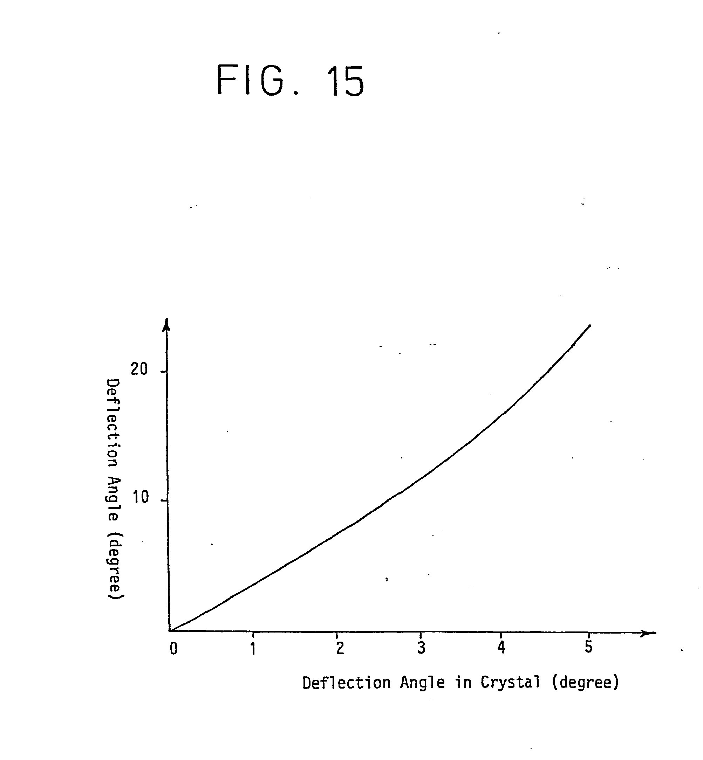

Fig. 15 shows the relationship between the deflection angle $\alpha$ and the deflection angle $\beta$ for the case where tapering angle $\gamma$ of the body 8 (Fig. 13) is set at 110°. As a result, it is inferred that the deflection angle $\beta$ changes substantially linearly relative to the deflection angle $\alpha$ of the incident light. Since the deflection angle $\alpha$ is controlled in the embodiment of Fig. 13 by the high-frequency voltage applied, the incident light beam is continuously deflected in response to the saw-tooth wave voltage applied to the IDEs from the voltage source (Fig. 6).

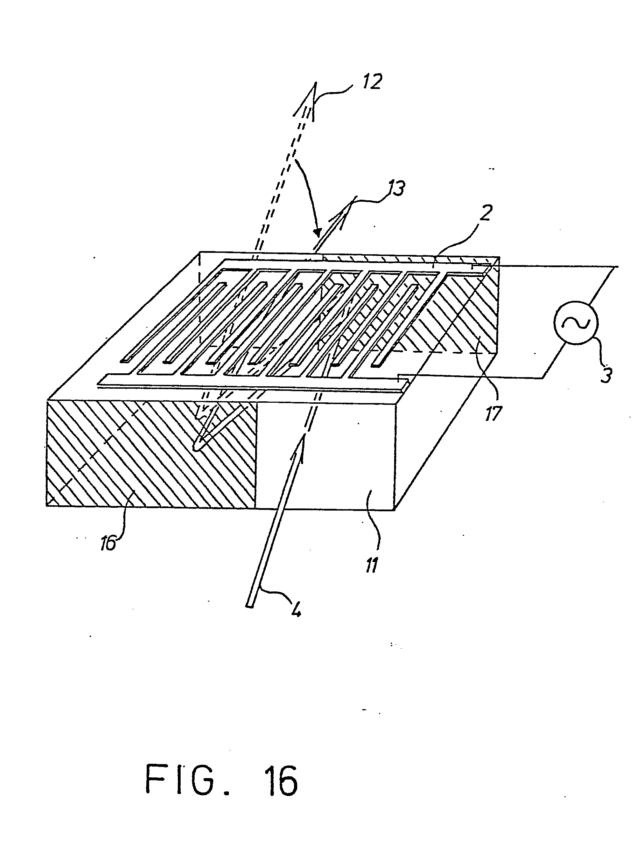

Referring to Fig. 16, the fifth embodiment adapted to provide a larger deflection angle comprises a light transmissive body 11 made of lithium niobate and having silver reflection films 16 and 17 formed on a part of the light-beam incident surface and light-beam output surface thereof, respectively, a high-frequency voltage source 3, and IDEs 2 formed on the top surface of the body 11 so as to change the refractive index of the body 11 in response to the high-frequency voltage fed from the source 3. With this structure, it is assumed now that the light beam 4 is made incident onto the non-reflection-film portion of the surface of the body 11. In the absence of the high-frequency voltage applied to the IDEs 2, the incident light beam 4 is reflected by the reflection film 17 and then by the reflection film 16 and emanates as a light beam 12 from the output surface of the body 11. With the high-frequency voltage applied to the IDEs 2, the incident light beam 4 is deflected due to the refractive index change and then reflected by the reflection film 17. The light beam thus reflected is again deflected in the body 11, then reflected on the reflection film 16, again deflected by the body 11, and eventually emanates therefrom in the direction shown by an arrow 13. This embodiment is equivalent to the case where the body 11 is lengthened, providing a larger deflection angle. In this embodiment, when the light beam is made incident onto the body 11 satisfying the conditions 8 shown in Table 2, the incident light beam is deflected by 6 degrees.

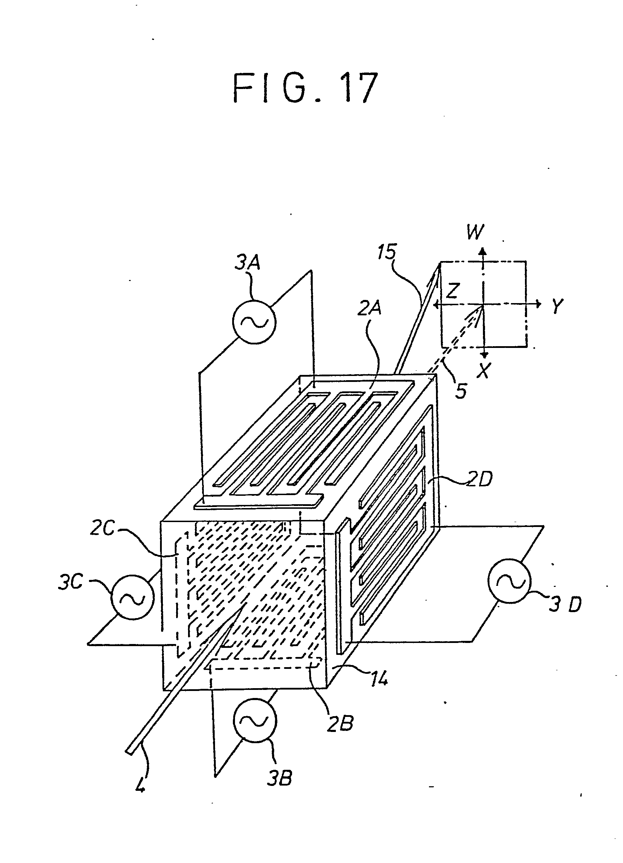

Referring to Fig. 17, the sixth embodiment of the present invention comprises a rectangular parallelepiped light transmissive body 14 made of lithium niobate; interdigital electrodes (IDEs) 2A and 2B formed on the top and bottom surfaces of the body 14 and arranged to cause deflection of the incident light beam in the vertical w and x directions as represented by arrows, respectively. Interdigital electrodes IDEs 2C and 2D formed on the opposite left and right side surfaces of the substrate 14 and arranged to cause deflection of the incident light beam in the horizontal y and z directions as represented by arrows, respectively; and high-frequency voltage source 3A to 3D for applying high-frequency voltages to these IDEs 2A through 2D, respectively. According to this structure, the light beam 4 can be deflected in any desired direction, in response to the high-frequency voltages applied to the IDEs 2A to 2D accordingly from the sources 3A through 3D, and emanates from the light transmissive body 14 e.g. in the direction shown by an arrow 15 in Fig. 17.

TABLE 2

| CONDITIONS | | | 1 | 2 | 3 | 4 | 5 | 6 | 7 | 8 |
|---|---|---|---|---|---|---|---|---|---|---|
| Embodiment | | | 1 | 1 | 2 | 3 | 3 | 4 | 5 | 6 |
| Structure | | | Fig. 1 | Fig. 1 | Fig. 8 | Fig. 10 | Fig. 1 | Fig. 8 | Fig. 13 | Fig. 16 |
| Characteristic | | | Fig. 3 | Fig. 7 | Fig. 9 | Fig. 11 | | Fig. 12 | Fig. 14 | |
| Material of Substrate | | | $LiNbO_3$ | PLZT | $Bi_{12}GeO_{20}$ | $PbMoO_4$ | glass:$SiO_2$ 38%,$PbO$ 60% | $TiO_2$ | $LiNbO_3$ | $PbMoO_4$ |
| Deflection Angle (degree) | | | 1.7 | 4.1 | 0.65 | 2.4 | 0.2 | 0.6 | 4 | 6 |
| Applied Voltage (Volt) | | | 28 | 14 | 18 | 20 | 20 | 40 | 28 | 20 |
| Drive-Frequency (MHz) | | | 40 | 109 | 185 | 240 | 180 | 0 (direct) | 40 | 240 |
| Dimension of Substrate, in mm (length × width × thickness) | | | 14×12×2 | 10×10×2 | 16×16×0.5 | 11×11×2 | 13×13×1 | 10×10×1 | 14×12×2 | 11×11×2 |
| Diameter of Light Beam (μm) | | | 200 | 200 | 200 | 200 | 200 | | 200 | 200 |
| Incident Position of Beam (mm) Distance from Surface | | | 0.2 | 0.2 | 0.2 | 0.2 | 0.2 | | 0.2 | 0.2 |
| Kinds of Electrodes | Interdigital Electrodes | Number of Pair | 20 | 16 | | 16 | 16 | | 20 | 16 |
| | | Gap of Electrode (μm) | 15 | 16 | | 16 | 16 | | 15 | 16 |
| | | Width of Electrode (μm) | 15 | 16 | | 16 | 16 | | 15 | 16 |
| | | Thickness of Electrode (nm) | 100 | 100 | | 100 | 100 | | 100 | 100 |
| | | Length of Overlapped Electrode, (mm) | 10 | 8 | | 8 | 10 | | 10 | 10 |
| | Coplanar Electrodes | Length of Electrode (mm) | | | 15 | | | 10 | | |
| | | Width of Electrode (mm) | | | 0.3 | | | 0.2 | | |
| | | Gap of Electrode (μm) | | | 25 | | | 10 | | |
| | | Thickness of Electrode (nm) | | | 100 | | | 100 | | |

0 019 278

# 0 019 278

**Claims**

1. An electro-optic light deflector comprising:

a) a light transmissive body (1;8;11;14) changing its refractive index when subjected to an electric field;

b) elongated electrodes (2;70) arranged on a surface of said body (1;8;11;14) and spaced apart in a direction perpendicular to the travelling direction of a light beam (4);

c) a voltage source (3) for generating a high-frequency voltage;

d) means for applying said voltage to said electrodes (2;70), characterised in that

e) means are provided for making the light beam (4) enter into said body (1;8;11;14) in a direction perpendicular to its thickness direction and at a given distance from said surface provided with said electrodes (2;70), and

f) said high-frequency voltage represents a saw tooth wave of such values, that the distribution of the refractive index changes in said thickness direction from a large value at a portion near said surface provided with electrodes (2;70) to a small value towards the interior of said body (1;8;11;14), in response to which changing refractive index distribution the incident light beam (4) is deflected within said thickness direction towards said surface.

2. An electrooptic light deflector as claimed in Claim 1 wherein said body is made of triclinic crystal made of $CsH_3(SeO_3)$.

3. An electrooptic light deflector as claimed in Claim 1, wherein said body is made of trigonal crystal of a material chosen from the group consisting of $LiNbO_3$ and $LiTaO_3$.

4. An electrooptic light deflector as claimed in Claim 1, wherein said body is made of monoclinic crystal of a material chosen from the group consisting of $C(CH_2OH)_4$ and $Ca_2Nb_2O_7$.

5. An electrooptic light deflector as claimed in Claim 1, wherein said body is made of a hexagonal crystal of a material chosen from the group consisting of $TeO_2$, $YAl O_3$ and $SiO_2$.

6. An electrooptic light deflector as claimed in Claim 1, wherein said body is made of a rhombic crystal of a material chosen from the group consisting of $\alpha$-$HIO_3$, $Ba_2NaNb_5O_{15}$, and Rochelle salt.

7. An electrooptic light deflector as claimed in Claim 1, wherein said body is made of a cubic crystal of a material chosen from the group consisting of $Y_3Al_5O_{12}$, $Gd_3Ga_5O_{12}$, $Bi_{12}GeO_{20}$, GaAs, ZnS, and GaP.

8. An electroptic light deflector as claimed in Claim 1, wherein said body is made of a tetragonal crystal of a material chosen from the group consisting of $PbMoO_4$, $TiO_2$, $CaWO_4$, $BaTiO_3$, $KH_2PO_4$, and $NH_4H_2PO_4$.

9. An electrooptic light deflector as claimed in Claim 1, wherein said body is made of a polycrystal of a material chosen from the group consisting of (Pb, La) (Zr, Ti)$O_3$ and (Pb, Bi) (Zr, Ti)$O_3$.

10. An electrooptic light deflector as claimed in Claim 1, wherein said body is in amorphous state of a material chosen from the group consisting of glass ($SiO_2$, PbO), glass of $TeO_2$, and glass of $As_2S_3$.

11. An electrooptic light deflector as claimed in any of claims 1 to 10, wherein said electrodes (2) are interdigital electrodes (IDE).

12. An electrooptic light deflector as claimed in any of claims 1 to 11, wherein said electrodes (2) are coplanar electrodes.

13. An electrooptic light deflector as claimed in any of claims 1 to 12, wherein said body (8) has a lightbeam output surface tapered toward one surface thereof.

14. An electrooptic light deflector as claimed in any of claims 1 to 13, wherein a reflection film (16, 17) is formed on one of light-beam incident surface and light-beam output surface of said body (11), respectively.

15. An electro-optic light deflector as claimed in claim 1, with a parallelepiped light transmissive body (14) and interdigital electrodes (2A to 2D), characterised by

a) first through fourth electrodes (2A to 2D) arranged on first through fourth side surfaces of said body, (14) except for the light-beam incident surface and the light-beam output surface thereof;

b) first through fourth voltage sources (3A to 3D) for generating high-frequency voltages;

c) means for applying said voltages to said electrodes (2A to 2D),

whereby a light beam (4) incident onto one end surface of said body (14) is deflectable in response to said voltages in any desired direction.

**Revendications**

1. Déflecteur électro-optique de lumière comprenant:

a) un corps transmettant la lumière (1; 8; 11; 14), dont l'indice de réfraction est variable lorsqu'il est soumis à un champ électrique;

b) des électrodes allongées (2; 70) agencées sur une surface du corps (1; 8; 11; 14) et espacées dans une direction perpendiculaire au sens de propagation d'un faisceau lumineux (4);

c) une source de tension (3) pour produire une tension à haute fréquence;

d) un moyen pour appliquer la tension aux électrodes (2; 70) caractérisé en ce que:

e) des moyens sont prévus pour faire entrer le faisceau lumineux (4) dans le corps (1; 8; 11; 14) dans une direction perpendiculaire au sens de son épaisseur et à une distance donnée de la surface comportant les électrodes (2; 70); et

f) la tension à haute fréquence représente une onde en dents de scie, de valeurs telles que la distribution de l'indice de réfraction passe dans le sens de l'épaisseur d'une valeur élevée à une partie proche de la surface comportant les électrodes (2; 70) à une valeur faible vers l'intérieur du corps (1; 8; 11; 14), le faisceau lumineux incident (4), en réponse à ce changement de la distribution de l'indice de réfraction, étant dévié dans le sens de l'épaisseur vers la surface.

2. Déflecteur électro-optique de lumière selon la revendication 1, où le corps est en cristal triclinique constitué de $CsH_3(SeO_3)$.

3. Déflecteur électro-optique de lumière selon la revendication 1, où le corps est constitué d'un cristal trigonal d'un matériau choisi dans le groupe constitué de $LiNbO_3$ et $LiTaO_3$.

4. Déflecteur électro-optique de lumière selon la revendication 1, où le corps est constitué d'un cristal monoclinique d'un matériau choisi dans le groupe constitué de $C(CH_2OH)_4$ et $Ca_2Nb_2O_7$.

5. Déflecteur électro-optique de lumière selon la revendication 1, où le corps est constitué d'un cristal hexagonal d'un matériau choisi dans le groupe constitué de $TeO_2$, $YAlO_3$ et $SiO_2$.

6. Déflecteur électro-optique de lumière selon la revendication 1, où le corps est constitué d'un cristal rhombique d'un matériau choisi dans le groupe constitué de $\alpha$-$HIO_3$, $Ba_2NaNb_5O_{15}$ et de sel de Seignette.

7. Déflecteur électro-optique de lumière selon la revendication 1, où le corps est constitué d'un cristal cubique d'un matériau choisi dans le groupe constitué de $Y_3Al_5O_{12}$, $Gd_3Ga_5O_{12}$, $Bi_{12}GeO_{20}$, GaAs, ZnS et GaP.

8. Déflecteur électro-optique selon la revendication 1, où le corps est constitué dun cristal tétragonal d'un matériau choisi dans le groupe constitué de $PbMoO_4$, $TiO_2$, $CaWO_4$, $BaTiO_3$, $KH_2PO_4$ et $NH_4H_2PO_4$.

9. Déflecteur électro-optique de lumière selon la revendication 1, où le corps est constitué d'un polycristal d'un matériau choisi dans le groupe constitué de (Pb, La) (Zr, Ti)$O_3$ et (Pb, Bi) (Zr, Ti)$O_3$.

10. Déflecteur électro-optique de lumière selon la revendication 1, où le corps est constitué d'un matériau à l'état amorphe choisi dans le groupe constitué du verre de ($SiO_2$, PbO) du verre de $TeO_2$, et du verre de $As_2S_3$.

11. Déflecteur électro-optique de lumière selon l'une quelconque des revendications 1 à 10, où les électrodes (2) sont des électrodes de chiffres (IDE).

12. Déflecteur électro-optique de lumière selon l'une quelconque des revendications 1 à 11, où les électrodes (2) sont des électrodes situées dans le même plan.

13. Déflecteur électro-optique de lumière selon l'une quelconque des revendications 1 à 12, où le corps (8) a une surface de sortie de faisceau lumineux chanfreinée vers l'une de ses surfaces. ⠄

14. Déflecteur électro-optique de lumière selon l'une quelconque des revendications 1 à 13, où une pellicule de réflexion (16, 17) est formée sur une partie de la surface sur laquelle tombe le faisceau lumineux et de la surface de sortie du faisceau lumineux (11), respectivement.

15. Déflecteur électro-optique de lumière selon la revendication 1, avec un corps parallélépipédique (14) transmettant la lumière et des électrodes de chiffres (2A à 2D), caractérisé par:

a) des première à quatrième électrodes (2A à 2D) disposées sur des première à quatrième surfaces latérales du corps (14) à l'exception de la surface sur laquelle tombe le faisceau lumineux et de sa surface de sortie du faisceau lumineux;

b) des première à quatrième sources de tension (3A à 3D) pour produire des tensions à haute fréquence;

c) un moyen pour appliquer les tensions aux électrodes (2A à 2D);

d'où il résulte qu'un faisceau lumineux (4) tombant sur une surface extrême du corps (14) peut être dévié en réponse aux tensions dans n'importe laquelle des directions désirées.

**Patentansprüche**

1. Electrooptischer Lichtablenkungsbaustein mit:

a) einem lichtdurchlässigen Körper (1; 8; 11; 14), dessen Brechungsindex sich unter Einwirkung eines elektrischen Feldes ändert,

b) langgestreckten Elektroden (2; 70) die auf einer Oberfläche des Körpers (1; 8; 11; 14) und in einer zur Ausbreitungsrichtung eines Lichtstrahles (4) senkrechten Richtung im Abstand voneinander angeordnet sind;

c) einer Spannungsquelle (3) zum Erzeugen einer hochfrequenten Spannung;

d) Einrichtungen zum Anlegen dieser Spannung an die Elektroden (2; 70), dadurch gekennzeichnet,

e) daß Einrichtungen vorgesehen sind, um den Lichtstrahl (4) in einer zu dessen Dickenrichtung senkrechten Richtung und in einem gegebenen Abstand von der mit den Elektroden (2; 70) versehenen Oberfläche in den Körper (1; 8; 11; 14) eintreten zu lassen, und

f) daß die hochfrequente Spannung durch eine Sägezahnwelle mit derartigen Werten verkörpert wird, daß sich die Verteilung des Brechungsindexes in der Dickenrichtung von einem großen Wert in

9

einem Teil nahe der mit den Elektroden (2; 70) versehenen Oberfläche zu einem kleinen Wert in Richtung auf das Innere des Körpers (1; 8; 11; 14) ändert, wobei der einfallende Lichtstrahl (4) als Folge der sich ändernden Verteilung des Brechungsindexes innerhalb der Dickenrichtung in Richtung auf die Oberfläche abgelenkt wird.

2. Electrooptischer Lichtablenkungsbaustein nach Anspruch 1, wobei der Körper aus einem aus $CsH_3(SeO_3)$. bestehenden triklinen Kristall besteht

3. Elektrooptischer Lichtablenkungsbaustein nach Anspruch 1, wobei der Körper aus einem trigonalem Kristall aus $LiNbO_3$ oder $LiTaO_3$ als Material besteht.

4. Elektrooptischer Lichtablenkungsbaustein nach Anspruch 1, wobei der Körper aus einem monoklinen Kristall aus $C(CH_2OH)_4$ oder $Ca_2Nb_2O_7$ als Material besteht.

5. Elektrooptischer Lichtablenkungsbaustein nach Anspruch 1, wobei der Körper aus einem hexagonalen Kristall aus $TeO_2$, $YAlO_3$ oder $SiO_2$ als Material besteht.

6. Elektrooptischer Lichtablenkungsbaustein nach Anspruch 1, wobei der Körper aus einem rhombischen Kristall aus $\alpha$-$HIO_3$, $Ba_2NaNb_5O_{15}$ oder Rochellesalz als Material besteht.

7. Electrooptischer Lichtablenkungsbaustein nach Anspruch 1, wobei der Körper aus einem kubischen Kristall aus $Y_3Al_5O_{12}$, $Gd_3Ga_5O_{12}$, $Bi_{12}GeO_2$, GaAs, ZnS oder GaP als Material besteht.

8. Elektrooptischer Lichtablenkungsbaustein nach Anspruch 1, wobei der Körper aus einem tetragonalem Kristall aus $PbMoO_4$, $TiO_2$, $CaWO_4$, $BaTiO_3$, $KH_2PO_4$ oder $NH_4H_2PO_4$ als Material besteht.

9. Elektrooptischer Lichtablenkungsbaustein nach Anspruch 1, wobei der Körper aus einem Polykristall aus (Pb, La) (Zr, Ti)$O_3$ oder (Pb, Bi) (Zr, Ti)$O_3$ als Material besteht.

10. Elektrooptischer Lichtablenkungsbaustein nach Anspruch 1, wobei der Körper aus glasartigem ($SiO_2$, PbO), glasartigem $TeO_2$ oder glasartigem $As_2S_3$ in amorphem Zustand als Material besteht.

11. Elektrooptischer Lichtablenkungsbaustein nach einem der Ansprüche 1 bis 10, wobei die Elektroden (2) interdigitale Elektroden (IDE) sind.

12. Elektrooptische Lichtablenkungsbaustein nach einem der Ansprüche 1 bis 11, wobei die Elektroden (2) coplanare Elektroden sind.

13. Elektrooptischer Lichtablenkungsbaustein nach einem der Ansprüche 1 bis 12, wobei eine Lichtstrahlaustrittsfläche des Körpers 8 gegenüber einer anderen Fläche geneigt ist.

14. Electrooptischer Lichtablenkungsbaustein nach einem der Ansprüche 1 bis 13, wobei auf der Lichtstrahleintrittsfläche oder der Lichtstrahlaustrittsfläche des Körpers (11) eine reflektierende Schicht (16, 17) ausgebildet ist.

15. Elektrooptischer Lichtablenkungsbaustein nach Anspruch 1, mit einem parallelepipedförmigen lichtdurchlässigen Körper (14) und interdigitalen Elektroden (2A bis 2D), gekennzeichnet durch

(a) erste bis vierte Elektroden (2A bis 2D), die auf ersten bis vierten Seitenflächen des Körpers (14) außer der Lichteintrittsfläche und der Lichtaustrittsfläche angeordnet sind;

(b) erste bis vierte Spannungsquellen (3A bis 3D) zum Erzeugen von hochfrequenten Spannungen;

(c) Einrichtungen zum Anlegen dieser Spannungen an die Elektroden (2A bis 2D),
wodurch ein auf eine Endfläche des Körpers (14) auftreffender Lichtstrahl (4) als Folge dieser Spannungen in jede beliebige Richtung ablenkbar ist.

10

FIG. 1

# FIG. 2a

Refractive Index

$n_0$        $\Delta n$

Thickness

# FIG. 2b

FIG. 3

# FIG. 4

# FIG. 5

# FIG. 6

# FIG. 7

Deflection Angle (degree) vs Applied Voltage (volt)

FIG. 8

# FIG. 9

Deflection Angle (degree) vs. Applied Voltage (volt)

# FIG. 10

# FIG. 11

# FIG. 12

Deflection Angle (degree)

0,7

0,5

0,3

0    10    20    30    40

Applied Voltage (volt)

11

# FIG. 13

# FIG.14

Deflection Angle (degree)

Deflection Angle in Crystal (degree)

# FIG. 15

Deflection Angle (degree)

Deflection Angle in Crystal (degree)

FIG. 16

# F I G. 17